# FASCICULE DE BREVET EUROPEEN

(11) **EP 1 780 122 B1**
(45) Date de publication et mention de la délivrance du brevet: **14.01.2009**
(21) Numéro de dépôt: 06021801.3
(22) Date de dépôt: 18.10.2006
(51) Int. Cl.: B64C 27/615

(54) **Pale de giravion munie d'un volet orientable**
Rotorblatt versehen mit einer schwenkbaren Klappe
Rotor blade provided with a swivelling flap

(30) Priorité: 26.10.2005 FR 0510915
(43) Date de publication de la demande: 02.05.2007
(73) Titulaire: EUROCOPTER, 13725 Marignane Cédex (FR)
(72) Inventeur: Lorin De La Grandmaison, François, 56700 Hennebont (FR); Ardesi, Olivier, 13090 Aix En Provence (FR); Morant, Michel, 13320 Bouc Bel Air (FR); Gaffiero, Jacques, 75017 Paris (FR)
(74) Mandataire: Pouillot, Laurent Pierre Paul

(56) Documents cités:
- FR-A- 2 770 826
- US-A- 2 776 718
- US-A1- 2002 021 964
- US-B1- 6 454 207

## Description

La présente invention concerne une pale active de giravion munie à son bord de fuite d'un volet orientable, à l'aide d'au moins une rotule principale, commandé localement par un dispositif électromécanique intégrant un actionneur linéaire.

En effet, pour améliorer les performances aéroaccoustiques, vibratoires et aérodynamiques des pales d'un rotor principal d'avancement et de sustentation de giravion, il est avantageux de disposer un volet orientable au niveau du bord de fuite de chaque pale, dénommé par commodité volet de bord de fuite.

L'angle de braquage du volet par rapport à la pale est de l'ordre de plus ou moins 10 degrés à une fréquence de l'ordre de 30Hz. Pour être efficace, l'angle de braquage varie de façon active au cours du temps en fonction de nombreux paramètres tels que la position de la pale autour de l'axe du rotor principal, position dite « azimut », la vitesse de rotation du rotor principal et les mouvements de la pale en pas, en battement et en traînée.

Compte tenu des dimensions de la pale ainsi que des contraintes exercées sur le volet et la pale dues aux mouvements de battement, de traînée, et de pas de cette dernière, on comprend aisément les difficultés à vaincre pour obtenir un volet fiable, léger et répondant aux attentes du constructeur et des utilisateurs.

On connaît, par le document US 2002/0021964, un premier type de pale muni d'un volet. Les parties supérieure et inférieure du bord d'attaque du volet ont une forme convexe alors que la partie centrale de ce bord d'attaque a une forme concave. Ainsi, le bord d'attaque du volet a une forme en ε.

En outre, les parties supérieure et inférieure sont chacune reliées à un actionneur alors que la partie centrale concave est disposée contre un genou solidaire de la pale. Par conséquent, en activant l'un ou l'autre des actionneurs, le volet bascule autour du genou de façon à présenter l'inclinaison souhaitée.

Toutefois, sous l'effet des contraintes exercées sur la pale et le volet lors d'un vol, notamment provoquées par des mouvements de battement, il y a un risque de glissement du volet le long du genou ce qui pourrait provoquer une usure prématurée, voire même selon le pire des scénarii un blocage du volet rendant ce dernier inutilisable et dangereux.

De plus, on se rend bien compte que la forme globale du volet et plus particulièrement du bord d'attaque de ce volet n'est pas optimisée d'un point de vue aérodynamique ce qui peut éventuellement être la cause de désagréments acoustiques ou vibratoires et de dégradations des performances aérodynamiques.

Par ailleurs, on connaît selon le document US 6 454 207, un deuxième type de pale comportant un volet au niveau de son bord de fuite.

Le volet est fixé à la pale par un axe longitudinal, c'est-à-dire disposé selon l'envergure de la pale, qui traverse le volet. Par suite, le volet est apte à tourner autour de cet axe longitudinal en étant mis en mouvement par une bielle articulée solidaire de l'intrados du volet, cette bielle étant elle-même commandée par un actionneur. La bielle se situe donc partiellement à l'extérieur de l'ensemble pale/volet ce qui nuit à l'aérodynamisme de l'ensemble.

Ce deuxième type d'architecture, pour laquelle le volet tourne autour d'un axe, présente encore l'inconvénient d'occasionner un éventuel blocage du volet. En effet, il ne faut pas perdre de vue que les contraintes mécaniques exercées sur le volet et la pale au cours du vol sont très importantes. Il y a par conséquent un risque non négligeable d'assister à une déformation de l'axe, le volet ne pouvant de ce fait plus être braqué à l'inclinaison souhaitée.

Enfin, on connaît par le document FR 2 770 826considéré comme l'art antérieur le plus proche, un troisième type de pale équipée d'un volet. Désormais, le volet n'est pas relié à la pale par un axe longitudinal mais par deux tourillons disposés de chaque côté du volet. En outre, le volet est muni d'un bras flexible qui est positionné à l'intérieur de la pale en étant relié, via un levier, à un ensemble de deux moteurs rotatifs agissant sur des excentriques coaxiaux. A l'aide de cet ensemble de deux moteurs rotatifs, le dispositif commande l'inclinaison du bras flexible et ainsi du volet.

Néanmoins, tout comme pour le deuxième type de pale, les tourillons autour desquels le volet bascule ne semblent pas présenter totalement une robustesse suffisante pour garantir le bon fonctionnement du système pendant un temps raisonnable.

La présente invention a pour objet de proposer une pale active munie d'un volet permettant de s'affranchir des limitations des pales mentionnées ci-dessus.

Par ailleurs, il est bon de rappeler que les pales de giravion sont extrêmement minces, c'est-à-dire que l'épaisseur relative des sections de la pale est faible, de sorte que l'épaisseur de la pale est faible et ce particulièrement au niveau de leur bord de fuite ou l'épaisseur diminue. Ainsi, l'épaisseur maximale du volet est de l'ordre de 20 millimètres. Il va s'en dire que dans un tel cas le dispositif autorisant l'inclinaison du volet par rapport à la pale doit être compact pour pouvoir être logé dans la pale et/ou le volet.

De plus, comme nous l'avons vu précédemment, il est important que l'ensemble soit robuste pour éviter une usure prématurée voire même un blocage du volet qui pourrait s'avérer catastrophique.

Enfin, pour réduire les efforts inertiels exercés sur la pale et le volet, il est impératif que la masse de l'ensemble reste la plus faible possible.

Selon l'invention, une pale de rotor de giravion comporte au moins un volet orientable de bord de fuite, ce volet étant apte à effectuer un pivotement autour d'un axe charnière virtuel orienté sensiblement selon l'envergure de la pale et du volet. La pale est remarquable en ce qu'elle est pourvue d'au moins une rotule principale munie d'une cage interne ainsi que d'un premier arbre et d'une cage externe, la partie avant de la cage externe de la rotule principale étant reliée à un actionneur linéaire qui est agencé dans la pale et qui permet le pivotement du volet, le premier arbre de la rotule principale étant perpendiculaire à l'axe charnière virtuel de rotation du volet.

Cette configuration est très originale puisque l'arbre de la rotule principale n'est pas confondu avec l'axe charnière virtuel de rotation du volet ou du moins dirigé selon ce dernier. Cela revêt une grande importance dans la mesure où il devient possible d'agencer une rotule dans un espace qui est pourtant très exigu.

L'utilisation d'une telle rotule permet de répondre parfaitement au problème, la robustesse de ces équipements mécaniques n'étant plus à démontrer. De plus, il n'est plus nécessaire de pourvoir le volet d'un axe longitudinal ou de tourillons afin de le faire pivoter ce qui limite les risques de blocage de ce volet.

Comme décrit à l'aide des figures, afin de limiter l'usure de la rotule principale, cette dernière est si nécessaire précontrainte.

De plus, la rotule principale est avantageusement autolubrifiée, les faces des cages externe et interne en contact les unes avec les autres étant recouvertes de téflon par exemple.

En outre, le pivotement du volet est optimisé lorsque l'axe de symétrie de la rotule principale est agencé sensiblement à 25 % de la corde du volet en partant du bord d'attaque de ce volet.

Le premier arbre de la rotule principale est maintenu dans une position fixe. Ainsi, ce premier arbre est solidaire de la pale, les cages externe et interne de la rotule principale étant disposées entre les plateaux supérieur et inférieur d'une chape agencée au bord de fuite de la pale, le premier arbre de la rotule principale traversant les plateaux supérieur et inférieur.

De plus, l'actionneur, de type électromécanique par exemple, est relié à la partie avant de la cage externe de la rotule principale successivement par une première bielle, un bras coudé, un pivot flexible extensible puis par une deuxième bielle. Lorsque l'actionneur est mis en mouvement, il déplace linéairement la première bielle ce qui a pour conséquence un basculement du bras coudé. Par suite, le premier arbre de la rotule principale étant bloqué par les plateaux supérieur et inférieur et ne pouvant donc pas se déplacer, la cage externe de la rotule principal pivote autour de la cage interne ce qui permet au volet de pivoter, via la partie arrière de la cage externe de la rotule principale qui est solidaire du volet.

Avantageusement, la première bielle est une lame flexible, éventuellement intégrée au bras coudé dans une variante de l'invention.

Selon un premier mode de réalisation, le pivot flexible extensible comporte un pivot simple, une tige et un manchon fileté. Le pivot simple est alors relié d'une part au bras coudé et d'autre part à la tige, le manchon fileté étant rendu solidaire de la deuxième bielle et la tige étant emmanchée à l'intérieur de ce manchon fileté.

Selon un deuxième mode de réalisation, le pivot flexible extensible comporte un ressort à spires jointives au repos, le ressort étant solidaire d'une part du bras coudé et d'autre part de la deuxième bielle.

Enfin, quelque soit le mode de réalisation choisi, en fonction de l'actionneur, de la dimension du volet et des contraintes exercées en vol, un nombre plus important d'actionneurs et de rotules principales est envisageable, un actionneur étant associé à une rotule. Par suite, lorsque la pale comporte deux actionneurs, la pale est munie de deux rotules principales, la distance séparant les deux rotules principales selon l'envergure du volet étant de préférence égale à la moitié de l'envergure du volet.

L'invention et ses avantages apparaîtront avec plus de détails dans le cadre de la description suivante, qui illustre des exemples de réalisation préférés, donnés sans aucun caractère limitatif, en référence aux figures annexées qui représentent :
- la figure 1, une vue schématique isométrique d'une pale selon un premier mode de réalisation,
- la figure 2, une coupe d'une pale selon un premier mode de réalisation,
- la figure 3, la cinématique mise en oeuvre par le premier mode de réalisation,
- la figure 4, une variante du premier mode de réalisation, et
- la figure 5, le pivot flexible selon un deuxième mode de réalisation.

Les éléments présents dans plusieurs figures distinctes sont affectés d'une seule et même référence.

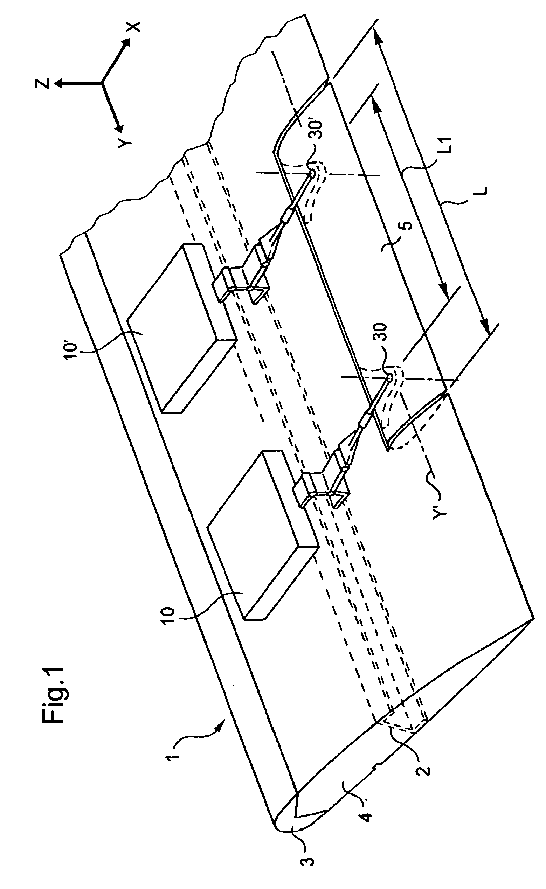

La figure 1 présente une vue schématique isométrique de l'invention selon un premier mode de réalisation.

Une pale 1 de giravion est munie d'un volet 5 de bord de fuite. De plus, deux actionneurs électromécaniques 10, 10' sont agencés à l'intérieur du caisson 4 de la pale 1 disposé entre le longeron 3 et la nervure 2 en forme de U de la pale 1.

Les actionneurs 10, 10' permettent au volet 5 de bord de fuite de pivoter autour de l'axe charnière virtuel Y' afin d'améliorer les performances aéroaccoustiques, aérodynamiques et vibratoires de la pale 1. Ils sont eux-mêmes commandés par un boîtier électronique, non représenté sur les figures, qui fournit la loi de pilotage du volet (angle de braquage/fréquence) en fonction de la configuration de vol du giravion. Les actionneurs 10, 10' sont de plus alimentés électriquement par un collecteur disposé au niveau du rotor du giravion via un circuit électrique intégré à la pale 1 le long de son envergure.

En mode actif, des capteurs de position envoient des signaux au boîtier électronique pour que ce dernier puisse asservir le volet. Pour certaines configurations de vol, le système sera en mode passif, le volet 5 restant alors immobilisé en position dans le prolongement du profil de base de la pale 1.

Selon la nécessité, un ou plusieurs volets sont agencés sur la pale 1, de préférence au voisinage de l'extrémité libre de celle-ci.

Bien évidemment suivant le besoin, un nombre différent d'actionneurs pourra être prévu. Toutefois, lorsque le volet 5 est pivoté à l'aide de deux actionneurs 10,10', les rotules principales 30, 30' associées aux actionneurs 10, 10' sont de préférence séparées selon l'envergure du volet 5 par une distance L1 qui est égale à la moitié de l'envergure L du volet 5.

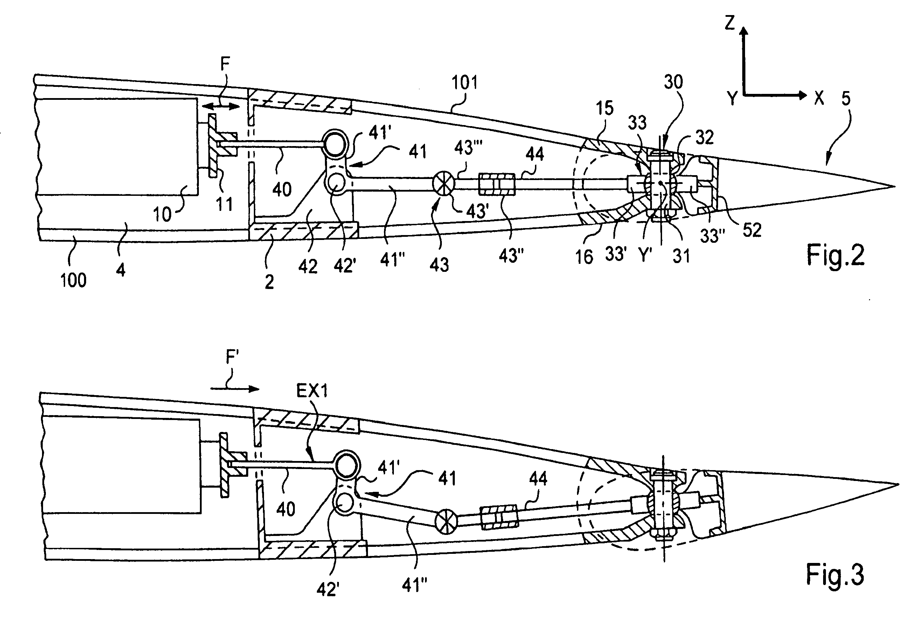

La figure 2 présente une coupe de la pale 1 selon un premier mode de réalisation.

Le bord de fuite de la pale 1 comporte une chape munie d'un plateau supérieur 15 et d'un plateau inférieur 16, cette chape pouvant être fixée à une nervure de la pale non représentée. Une rotule principale 30 est agencée sur cette chape.

Plus précisément, la rotule principale 30 comporte un premier arbre 31, une cage interne 32 et une cage externe 33. Les cages interne 32 et externe 33 sont disposées entre les plateaux supérieur 15 et inférieur 16, le premier arbre 31 passant au travers des plateaux supérieur 15 et inférieur 16 et étant fixé à ces derniers. Par conséquent, il est évident que le premier arbre est solidaire de la pale 1 et ne peut en aucun cas être mis en mouvement. En outre, le premier arbre 31 de la rotule principale 30 est sensiblement perpendiculaire à l'axe charnière virtuel Y' du volet 5.

De plus, la partie arrière 33" de la cage externe 33 de la rotule principale 30 est solidaire du volet 5, en étant noyée dans ce volet 5 ou en étant fixée sur la nervure 52 du volet 5 par exemple. Tout mouvement de la cage externe 33 impliquera donc un mouvement du volet 5.

Pour imprimer ce mouvement, et plus particulièrement un pivotement du volet 5 autour de l'axe charnière virtuel Y', la pale 1 dispose d'un actionneur 10 agencé dans le caisson 4 de la pale 1. Il s'agit d'un actionneur linéaire dont l'extrémité 11 est à même de se déplacer selon l'axe X conformément aux flèches F. On notera la présence de trappes d'accès 100 sur l'intrados de la pale 1 pour permettre des opérations de maintenance sur l'actionneur 10 par exemple.

La chaîne de transmission permettant de relier l'actionneur 10 au volet 5 comporte successivement une première bielle 40, un bras coudé 41, un pivot flexible extensible 43 et une deuxième bielle 44.

La première bielle 40, qui traverse d'ailleurs la nervure 2, est d'une part fixée à l'extrémité 11 de l'actionneur et au bras coudé 41 et plus particulièrement au bras primaire 41' du bras coudé 41.

Par ailleurs, le coude de ce bras coudé 41 est attaché à un support 42 à l'aide d'un arbre traversant 42', le support 42 étant solidaire de la nervure 2. Ainsi, le bras coudé 41 peut pivoter autour de l'arbre traversant 42'.

En outre, le bras secondaire 41" du bras coudé 41 est lié à une deuxième bielle 44 solidaire de la partie avant 33' de la cage externe 33 de la rotule principale 30 via un pivot flexible 43. Un pivotement du bras coudé 41 entraînera par suite le basculement de la deuxième bielle 44 et donc, compte tenu des faits évoqués précédemment du volet 5.

De plus, on comprend bien que la distance séparant l'arbre traversant 42' de la rotule principale 33 est constante. Il en va bien sûr de même de la longueur du bras coudé 41 et de la deuxième bielle 44. Pour autoriser le basculement, il est alors impératif que le pivot flexible autorise un allongement sensiblement selon l'axe X. C'est la raison pour laquelle on le nomme par commodité pivot flexible extensible.

Selon le premier mode de réalisation, le pivot flexible extensible 43 comporte un pivot simple usuel 43', un manchon fileté 43" et une tige 43"'. Le pivot simple est d'une part relié au bras secondaire 41" du bras coudé 41 et d'autre part à la tige 43"'. Cette tige 43"' est emmanchée dans le manchon fileté 43", lui-même vissé sur la deuxième bielle 44. L'emmanchement de la tige 43"' dans le manchon fileté autorise un déplacement de la tige 43"' par rapport au manchon fileté 43" selon l'axe X.

Enfin, une trappe d'accès 101 est prévue sur l'extrados de la pale 1 afin qu'un opérateur puisse accéder à la chaîne de transmission.

Par ailleurs, pour limiter l'usure de la rotule principale 30, cette dernière est précontrainte pour annuler le jeu séparant les cages interne 32 et externe 33 de la rotule principale 30.

En effet, les efforts centrifuges s'appliquant sur l'ensemble volet/rotule principale exercent une précontrainte naturelle sur la rotule principale dans le sens de l'envergure de la pale. Si le niveau de cette précontrainte est suffisamment élevé, les cages interne 32 et externe 33 de la rotule principale 30 restent toujours en contact malgré les autres efforts (dynamiques, aérodynamiques et de commande) auxquelles elles sont soumises dans le sens de la corde de la pale.

Toutefois, si le niveau de la contrainte apporté naturellement par les efforts centrifuges est insuffisant, la rotule principale 30 est mécaniquement précontrainte. Par suite, la pale comporte alors un dispositif de type ressort, introduit entre le volet 5 et le bord de fuite de la pale, qui permet d'exercer un effort permanent tendant par exemple à écarter le volet 5 du bord de fuite de la pale.

La figure 3 présente la cinématique mise en oeuvre selon le premier mode de réalisation pour obtenir le pivotement du volet 5.

Le boîtier électronique commande l'actionneur 10 pour que ce dernier déplace son extrémité conformément à la flèche F'. la première bielle 40 pousse alors le bras primaire 41' vers la droite ce qui provoque un basculement du bras coudé 41 autour de l'arbre traversant 42'. Le bras secondaire 41" s'incline par suite vers le bas ce qui provoque l'inclinaison vers le haut de la deuxième bielle 44. Pour effectuer ce mouvement, la tige 43"' s'est légèrement déplacée à l'intérieur du manchon fileté.

Comme décrit ci-dessus, la deuxième bielle 44 est solidaire de la partie avant 33' de la cage externe 33 de la rotule principale 30. Le premier arbre 31 étant fixe, la cage externe 33 pivote autour de la cage interne 32 et permet au volet 5 de pivoter autour de l'axe charnière virtuel Y'.

Bien évidemment, ces mouvements sont inversés pour faire pivoter le volet vers le bas.

Par ailleurs, la première bielle 40 est avantageusement flexible. En effet, bien que les déplacements soient d'une amplitude relativement faible, le basculement du bras coudé 41 induit une flexion de l'extrémité EX1 de la première bielle 40, cette flexion pouvant à terme endommager la bielle ou l'actionneur. C'est la raison pour laquelle il est préférable que la première bielle soit une lame flexible.

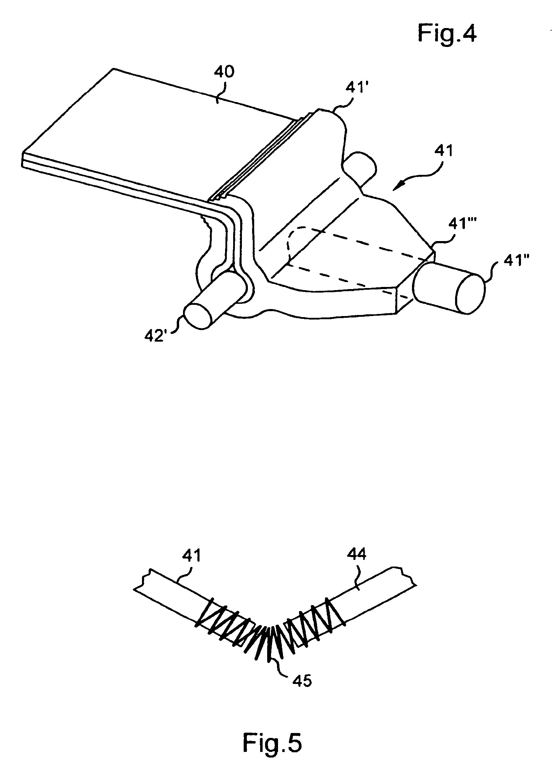

Suivant une variante de ce mode de réalisation, en référence à la figure 4, la première bielle 40 en forme de lame flexible est intégrée au bras coudé 41 de manière à composer une unique pièce en matériau composite ce qui est avantageux d'un point de vue coût et d'un point de vue masse du dispositif. Des tissus de verre viennent entourer l'arbre traversant 42' de manière à former la première bielle 40 qui fait aussi partiellement partie du bras primaire 41'.

Le bras secondaire 41", qui sera ensuite fixé au pivot flexible extensible, est alors disposé perpendiculairement à l'arbre traversant 42'. D'autres tissus de verre 42"', par exemple, viennent alors enrober l'arbre traversant 42', le bras secondaire 41" et les tissus de verre de la première bielle 40 qui font partie du bras primaire 41'.

En référence à la figure 5, selon un deuxième mode de réalisation, le pivot flexible extensible comporte un ressort 45 à spires jointives au repos. Ce ressort autorise à la fois un débattement selon l'axe X et un pivotement du bras coudé 41 et de la deuxième bielle 44. Le ressort a une raideur suffisante pour éviter une déformation de ce dernier due aux contraintes exercées sur la pale 1.

De plus, le pivot extensible est avantageusement enrobé d'un matériau en élastomère, non représenté sur la figure 5, qui améliore la tenue du pivot extensible tout en préservant sa souplesse.

La cinématique de ce deuxième mode de réalisation est alors sensiblement équivalente à celle décrite par la figure 3.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Ainsi, selon une variante de l'invention non décrite par une figure, la pale comporte au moins une rotule principale commandable par un actionneur et au moins une rotule de fixation non commandable par un actionneur munie d'une cage externe, d'une cage interne et d'un deuxième arbre. Dans cette configuration, l'agencement de la rotule de fixation est identique à celui de la rotule principale. Par suite, les cages externe et interne de la rotule de fixation sont disposées entre les plateaux supérieur 15 et inférieur 16, le deuxième arbre passant au travers des plateaux supérieur 15 et inférieur 16 et étant fixé à ces derniers. Toutefois, la partie avant de la cage externe de la rotule de fixation n'est pas reliée à un actionneur ce qui implique que cette rotule de fixation n'est pas commandable.

On comprend, que par analogie avec la variante décrite par la figure 1, les rotules principale commandable et de fixation non commandable sont de préférence séparées selon l'envergure du volet par une distance qui est égale à la moitié de l'envergure du volet.

## Revendications

1. Pale (1) de rotor de giravion comportant au moins un volet (5) orientable de bord de fuite, ledit volet (5) étant apte à effectuer un pivotement autour d'un axe charnière virtuel (Y') orienté sensiblement selon l'envergure de ladite pale (1) et dudit volet (5),
**caractérisée en ce que** ladite pale (1) comporte au moins une rotule principale (30) munie d'une cage interne (32) ainsi que d'un premier arbre (31) et d'une cage externe (33), la partie avant (33') de ladite cage externe (33) de la rotule principale (30) étant reliée à un actionneur linéaire (10, 10') qui est agencé dans ladite pale (1) et qui permet le pivotement dudit volet (5), ledit premier arbre (31) de la rotule principale (30) étant sensiblement perpendiculaire audit axe charnière virtuel (Y') de rotation dudit volet (5).

2. Pale selon la revendication 1,
**caractérisée en ce que** l'axe de symétrie de ladite rotule principale (30) est agencée sensiblement à 25 % de la corde dudit volet (5) en partant dudit bord d'attaque dudit volet (5).

3. Pale selon l'une quelconque des revendications précédentes,
**caractérisée en ce que** ladite rotule principale (30) est autolubrifiée.

4. Pale selon l'une quelconque des revendications précédentes,
**caractérisée en ce que** ledit premier arbre (31) est solidaire de ladite pale (1), lesdites cages externe (33) et interne (32) de la rotule principale (30) étant disposées entre les plateaux supérieur (15) et inférieur (16) d'une chape agencée au bord de fuite de la pale, ledit premier arbre (31) de la rotule principal (30) traversant lesdits plateaux supérieur (15) et inférieur (16).

5. Pale selon la revendication 4,
**caractérisée en ce que** ledit actionneur (10) est relié à ladite partie avant (33') de la cage externe (33) de ladite rotule principale (30) successivement par une première bielle (40), un bras coudé (41), un pivot flexible extensible (43) puis par une deuxième bielle (44).

6. Pale selon la revendication 5,
**caractérisée en ce que** ladite première bielle (40) est une lame flexible.

7. Pale selon la revendication 6,
**caractérisée en ce que** ladite lame flexible est intégrée audit bras coudé (42).

8. Pale selon l'une quelconque des revendications 5 à 7,
**caractérisée en ce que** ledit pivot flexible extensible (43) comporte un pivot simple (43'), une tige (43"') et un manchon fileté (43"), ledit pivot simple (43') étant relié d'une part audit bras coudé (42) et d'autre part à ladite tige (43"'), le manchon fileté (43") étant rendu solidaire de la deuxième bielle (44), ladite tige (43"') étant emmanchée à l'intérieur dudit manchon fileté (43").

9. Pale selon l'une quelconque des revendications 5 à 7,
**caractérisée en ce que** ledit pivot flexible extensible (43) comporte un ressort (45) à spires jointives au repos, ledit ressort (45) étant solidaire d'une part dudit bras coudé (42) et d'autre part de ladite deuxième bielle (44).

10. Pale selon l'une quelconque des revendications 4 à 9,
**caractérisée en ce que** la partie arrière (33") de la cage externe (33) de ladite rotule principale (30) est solidaire du volet (5).

11. Pale selon l'une quelconque des revendications précédentes,
**caractérisée en ce que**, ladite pale (1) comportant deux actionneurs (10,10'), ladite pale est munie de deux rotules principales (30,30'), la distance (L1) séparant lesdites deux rotules principales (30,30') selon l'envergure du volet étant égale à la moitié de ladite envergure (L) dudit volet.

12. Pale selon l'une quelconque des revendications précédentes,
**caractérisée en ce que** ladite pale comporte au moins une rotule de fixation non commandable par un actionneur.

## Claims

1. Rotorcraft rotor blade (1) including at least one tiltable trailing-edge flap (5), said flap (5) being suitable for pivoting about a virtual hinge axis (Y') extending substantially along the span of said blade (1) and of said flap (5),
**characterised in that** said blade (1) includes at least one main ball joint (30) provided with an inner cage (32) together with a first pin (31) and an outer cage (33), the front portion (33') of said outer cage (33) of the main ball joint (30) being connected to a linear actuator (10, 10') arranged in said blade (1) and serving to pivot said flap (5), said first pin (31) of the main ball joint (30) being substantially perpendicular to said virtual hinge axis (Y') about which said flap (5) pivots.

2. Blade according to Claim 1,
**characterised in that** the axis of symmetry of said main ball joint (30) is arranged substantially 25% of the way along the chord of said flap (5), starting from the leading edge of said flap (5).

3. Blade according to any one of the preceding claims,
**characterised in that** said main ball joint (30) is self-lubricating.

4. Blade according to any one of the preceding claims,
**characterised in that** said first pin (31) is secured to said blade (1), said outer and inner cages (33, 32) of the main ball joint (30) being disposed between the top and bottom plates (15, 16) of a fork arranged at the trailing edge of the blade, said first pin (31) of the main ball joint (30) passing through said top and bottom plates (15, 16).

5. Blade according to Claim 4,
**characterised in that** said actuator (10) is connected to said front portion (33') of the outer cage (33) of said main ball joint (30) successively via a first connecting rod (40), a crank (41), an extensible flexible pivot (43), and then via a second connecting rod (99).

6. Blade according to Claim 5,
**characterised in that** said first connecting rod (40) is a flexible leaf.

7. Blade according to Claim 6,
**characterised in that** said flexible leaf is integrated with said crank (42).

8. Blade according to any one of Claims 5 to 7,
**characterised in that** said extensible flexible pivot (43) comprises a simple pivot (43'), a rod (43'''), and a threaded sleeve (43"), said simple pivot (43') being connected on the one hand to said crank (42) and on the other hand to said rod (43"'), the threaded sleeve (43'') being secured to the second connecting rod (44), said rod (43"') being engaged in said threaded sleeve (43").

9. Blade according to any one of Claims 5 to 7,
**characterised in that** said extensible flexible pivot (43) comprises a spring (45) having turns that touch at rest, said spring (45) being secured on the one hand to said crank (42) and on the other hand to said second connecting rod (44).

10. Blade according to one of Claims 4 to 9,
**characterised in that** the rear portion (33'') of the outer cage (33) of the main ball joint (30) is secured to the flap (5).

11. Blade according to any one of the preceding claims,
**characterised in that** said blade (1) has two actuators (10, 10'), said blade being provided with two main ball joints (30, 30') spaced apart by a distance (L1) along the span of the flap that is equal to half said span (L) of said flap.

12. Blade according to any one of the preceding claims,
**characterised in that** said blade includes at least one fastening ball joint that is not controllable by an actuator.

## Patentansprüche

1. Rotorblatt (1) eines Drehflüglers, das mindestens eine verstellbare Hinterkantenklappe (5) aufweist, wobei die Klappe (5) fähig ist, eine Schwenkbewegung um eine virtuelle Scharnierachse (Y') auszuführen, die im Wesentlichen gemäß der Spannbreite des Blatts (1) und der Klappe (5) ausgerichtet ist, **dadurch gekennzeichnet, dass** das Blatt (1) mindestens ein Hauptkugelgelenk (30) aufweist, das mit einem inneren Käfig (32) sowie mit einer ersten Welle (31) und mit einem äußeren Käfig (33) versehen ist, wobei der vordere Teil (33') des äußeren Käfigs (33) des Hauptkugelgelenks (30) mit einem linearen Stellglied (10, 10') verbunden ist, das in dem Blatt (1) angeordnet ist und das Schwenken der Klappe (5) ermöglicht, wobei die erste Welle (31) des Hauptkugelgelenks (30) im Wesentlichen lotrecht zur virtuellen Drehscharnierachse (Y') der Klappe (5) ist.

2. Blatt nach Anspruch 1, **dadurch gekennzeichnet, dass** die Symmetrieachse des Hauptkugelgelenks (30) im Wesentlichen in 25 % der Sehne der Klappe (5) ausgehend von der Vorderkante der Klappe (5) angeordnet ist.

3. Blatt nach einem der vorhergehenden Ansprüche, **dadurch gekennzeichnet, dass** das Hauptkugelgelenk (30) selbstschmierend ist.

4. Blatt nach einem der vorhergehenden Ansprüche, **dadurch gekennzeichnet, dass** die erste Welle (31) fest mit dem Blatt (1) verbunden ist, wobei der äußere Käfig (33) und der innere Käfig (32) des Hauptkugelgelenks (30) zwischen der oberen Platte (15) und der unteren Platte (16) eines Gabelkopfs angeordnet sind, der an der Hinterkante des Blatts angeordnet ist, wobei die erste Welle (31) des Hauptkugelgelenks (30) die obere (15) und unter Platte (16) durchquert.

5. Blatt nach Anspruch 4, **dadurch gekennzeichnet, dass** das Stellglied (10) mit dem vorderen Teil (33') des äußeren Käfigs (33) des Hauptkugelgelenks (30) nacheinander durch eine erste Schubstange (40), einen gekrümmten Arm (41), ein flexibles schwenkbares Kniegelenk (43) und dann durch eine zweite Schubstange (44) verbunden ist.

6. Blatt nach Anspruch 5, **dadurch gekennzeichnet, dass** die erste Schubstange (40) eine flexible Lamelle ist.

7. Blatt nach Anspruch 6, **dadurch gekennzeichnet, dass** die flexible Lamelle in den gekrümmten Arm (42) integriert ist.

8. Blatt nach einem der Ansprüche 5 bis 7, **dadurch gekennzeichnet, dass** das flexible schwenkbare Kniegelenk (43) einen einfachen Drehzapfen (43'), eine Stange (43"') und eine Gewindemuffe (43") aufweist, wobei der einfache Drehzapfen (43') einerseits mit dem gekrümmten Arm (42) und andererseits mit der Stange (43"') verbunden ist, wobei die Gewindemuffe (43") fest mit der zweiten Schubstange (44) verbunden ist, wobei die Stange (43"') ins Innere der Gewindemuffe (43") eingeschoben ist.

9. Blatt nach einem der Ansprüche 5 bis 7, **dadurch gekennzeichnet, dass** das flexible schwenkbare Kniegelenk (43) eine Feder (45) mit in der Ruhestellung aneinanderliegenden Windungen aufweist, wobei die Feder (45) einerseits mit dem gekrümmten Arm (42) und andererseits mit der zweiten Schubstange (44) fest verbunden ist.

10. Blatt nach einem der Ansprüche 4 bis 9, **dadurch gekennzeichnet, dass** der hintere Teil (33") des äußeren Käfigs (33) des Hauptkugelgelenks (30) fest mit der Klappe (5) verbunden ist.

11. Blatt nach einem der vorhergehenden Ansprüche, **dadurch gekennzeichnet, dass**, wenn das Blatt (1) zwei Stellglieder (10, 10') aufweist, das Blatt mit zwei Hauptkugelgelenken (30, 30') versehen ist, wobei der die zwei Hauptkugelgelenke (30, 30') gemäß der Spannweite der Klappe trennende Abstand (L1) gleich der Hälfte der Spannweite (L) der Klappe ist.

12. Blatt nach einem der vorhergehenden Ansprüche, **dadurch gekennzeichnet, dass** das Blatt mindestens ein nicht durch ein Stellglied steuerbares Befestigungs-Kugelgelenk aufweist.
